# EUROPÄISCHE PATENTSCHRIFT

(11) **EP 0 814 275 B1**
(45) Veröffentlichungstag und Bekanntmachung des Hinweises auf die Patenterteilung: **04.06.2003**
(21) Anmeldenummer: 97110022.7
(22) Anmeldetag: 19.06.1997
(51) Int. Cl.: F16C 33/10, F16C 33/08, F16C 33/04, F16C 37/00, F16C 33/66

(54) **Hydrodynamisches Gleitlager für einen Läufer einer Pumpe**
Hydrodynamic sliding bearing for the rotor of a pump
Palier lisse hydrodynamique pour le rotor d'une pompe

(30) Priorität: 20.06.1996 DE 29610799 U
(43) Veröffentlichungstag der Anmeldung: 29.12.1997
(73) Patentinhaber: Klaus Union GmbH & Co.KG, D-44795 Bochum (DE)
(72) Erfinder: Knorr, Manfred, 44869 Bochum (DE)
(74) Vertreter: Patentanwälte Wenzel & Kalkoff

(56) Entgegenhaltungen:
- WO-A-91/12412
- DE-A- 3 232 473
- DE-U- 9 116 052
- DE-U- 29 500 108
- US-A- 5 248 245
- US-A- 5 435 701

## Beschreibung

Die Erfindung betrifft ein hydrodynamisches Gleitlager für einen Läufer einer Pumpe, insbesondere einer Magnetkupplungspume, wobei das Gleitlager als kombiniertes Axial- und Radial-lager ausgebildet ist gemäß den Oberbegriff des Anspruchs 1, wie sie aus der WO-A-9 112 412 bekannt gewerden ist.

Derartige Pumpen werden in großer Zahl in chemischen, petrochemischen und anderen Industrien verwendet, wenn es darauf ankommt, die Gefahr einer Leckage durch die Verwendung eines stopfbuchslosen Aggregats einzuschränken. Die Lagerung des Läufers bzw. des Laufrades und des direkt damit gekoppelten inneren Magnetträgers ist allerdings durch eine Schmierung beispielsweise durch Öl oder Fett nicht möglich, so daß das geförderte Medium als Schmiermittel herangezogen werden muß. Die Schmierung eines solchen Lagers wird dadurch erreicht, daß das zu fördernde Medium an einer Stelle hohen Druckes im Gehäuse der Pumpe entnommen und durch ein Bohrungssystem direkt in eine Schmiertasche des als kombiniertes Axial- und Radiallager ausgebildeten Gleitlagers geleitet wird. Dieser Teilstrom teilt sich im Bereich des Radiallagers und dient einerseits zur Schmierung der Gleitflächen im Radiallager und beider Axialflächen und andererseits zur Abfuhr der durch die Verlustleistung im Spaltrohr entstandenen Wärme. Hierfür wird einer der abgeteilten Teilströme durch ein Kanalsystem entlang des Spaltes zwischen innerem Magnettreiber und Spalttopf und zurück durch eine in der Pumpenwelle vorgesehene Bohrung bis zum Saugbereich der Pumpe geführt.

Es sind auch Ausführungen von Pumpen bekannt, die mehrere Gleitlager aufweisen. Um die Versorgung dieser Lager zu gewährleisten, wird der bereits erwähnte Teilstrom in weitere Teilströme aufgeteilt, die dann über Zufuhrkanäle zu den jeweiligen Gleitlagern zwangsgeführt werden.

Die Teilstrommenge, die an der Stelle des hohen Druckes im Gehäuse der Pumpe entnommen wird, ist so abgestimmt, daß im Normalbetrieb der Pumpe die Temperaturerhöhung des Teilstromes ca. 1 - 8°C beträgt (bezogen auf wasserähnliche Fluide).

Bedingt durch unterschiedliche Fördermedien mit zum Teil sehr geringen Viskositäten und damit sehr geringen Schmiereigenschaften und/oder Feststoffanteilen war oftmals der betriebssichere Einsatz dieser Gleitlager durch die Verwendung von Gleitlagerwerkstoffen aus kunstharzimprägnierter oder metallimprägnierter Hartbrandkohle oder aus Polyetrafluorethylen in Frage gestellt.

Als Gleitlagerstoff dominiert heute reines Siliziumkarbid, wobei Siliziumkarbidgleitlager aufgrund ihrer physikalischen Eigenschaften hohe Verschleißfestigkeit, gutes Temperaturverhalten und äußerst gute chemische Beständigkeit aufweisen und somit die Standzeit und Betriebssicherheit von Kreiselpumpen mit Magnetkupplung wesentlich erhöhen.

Es ist jedoch sehr zeit- und materialaufwendig, solche Gleitlager herzustellen, denn bei dem Material Siliziumkarbid handelt es sich um ein äußerst hartes Material, das sehr kostenintensiv und aufwendig zu bearbeiten ist. Die Bearbeitung solcher Gleitlager besteht darin, in den hülsenförmig gestalteten Gleitlagern sowohl eine Radialbohrung als auch eine Schmiertasche sowie axialgerichtete Bohrungen einzuarbeiten.

Die bisher bekannten Gleitlager weisen eine sehr große Tragfläche zur Lagerung der Pumpenwelle auf. Diese Lagerfläche ist deshalb notwendig, um die in einem Pumpensystem auftretenden Achsschubkräfte aufnehmen zu können. Da es sich bei dem Material Siliziumkarbid um ein sehr teures Material handelt, sind die bisher bekannten Gleitlager, die vollständig aus Siliziumkarbid bestehen, sehr teuer.

Es besteht daher die Aufgabe, ein hydrodynamisches Gleitlager, insbesondere für Magnetkupplungspumpen, zu schaffen, das zum einen kostengünstig herstellbar ist und zum anderen so gestaltet ist, daß jederzeit ausreichend Schmierung durch das zu fördernde Medium in das Gleitlager gelangt.

Die Aufgabe wird bei einem Gleitlager gemäß den Oberbegriff des Anspruchs 1 durch die Merkmale der Kernzeichnungsteils gelöst.

Der Grundgedanke der Erfindung ist es zunächst, den Anteil von Siliziumkarbid für Gleitlager zur Lagerung der Pumpenwelle einer Pumpe soweit wie möglich zu reduzieren und diese Teile, die aus Siliziumkarbid bestehen, nicht weiter mechanisch zu bearbeiten.

Daher erweist es sich als wesentlicher Vorteil, daß die zu bearbeitenden Teile des hydrodynamischen Gleitlagers aus Metall und die zur Erzeugung der Gleitfläche notwendigen Teile aus Siliziumkarbid bestehen.

Es sind die Vorteilhafterweise unmittelbar neben zwei Axiallagerringen vorgesehenen Lagerhülsen bzw. Lagerbüchsen so angeordnet, daß zwischen diesen eine Distanzhülse bzw. eine Distanzbüchse angeordnet ist.

Die Distanzhülse weist dabei einen Innendurchmesser auf, der dem Außendurchmesser der Pumpenwelle entspricht.

Für den Betrieb bei niedrigen Temperaturen (20 - 120°C) ist vorgesehen, daß die jeweiligen zu beiden Seiten der Distanzhülse angeordneten Lagerhülsen einen im Vergleich zum Außendurchmesser der Pumpenwelle größeren Innendurchmesser aufweisen. Hierbei übernehmen die beidseits des Radiallagers angeordneten Axiallagerscheiben die Zentrierung der Lagerhülsen. Bei Arbeitstemperaturen zwischen 120 und 250°C dehnen sich die Lagerhülsen/-büchsen und die Distanzbüchse/-hülse so aus, daß die Lagerhülsen unmittelbar an dem Umfang der Pumpenwelle in dem Bereich des Gleitlagers anliegen. Somit übernimmt dann die Pumpenwelle die korrekte Positionierung bzw. Zentrierung der Lagerhülsen.

Somit ist erfindungsgemäß der Innendurchmesser einer Lagerhülse größer als der Innendurchmesser einer Distanzhülse.

Ferner ist in einer bevorzugte Ausführungsform zur fluidmäßigen Versorgung des erfindungsgemäßen Gleitlagers mit einer Magnetkupplungspumpe ein Teilstrom vorgesehen, wobei der Teilstrom folgenden Verlauf aufweist:
a Entnahme eines Teilstroms T2 des zu fördernden Mediums in der Pumpe an einer Stelle hohen Drucks,
b Zwangsführung des Teilstroms T2 über mindestens einen Zufuhrkanal in eine Schmiertasche, die im Radiallager des Gleitlagers angeordnet ist,
c Aufteilung des Teilstroms T2 in zwei weitere Teilströme T2a und T2b,
d Zwangsführung der beiden Teilströme T2a und T2b entlang der Gleitflächen der Lagerhülsen bzw. Lagerbüchsen weiter zu den Axiallagern,
e Zwangsführung der beiden Teilströme T2a und T2b über Kanalausbildungen zurück in den Saugbereich der Pumpe.

Der Teilstrom, der an der Stelle eines hohen Druckes aus dem Pumpenraum entnommen wird, weist an der Stelle, an der er sich in zwei weitere Teilströme teilt, nämlich in der Schmiertasche des Gleitlagers, einen so hohen Druck auf, daß diese beiden weiteren Teilströme zwischen der Innenseite der Lagerbüchse und der Außenseite der Lagerhülse entlang der Gleitflächen durchströmen und zwar so weit, bis diese Teilströme in Kanalausbildungen gelangen, die dann den einen Teilstrom zurück in den Saugraum und den anderen Teilstrom durch im inneren Magnettreiber vorgesehene Bohrungen und von hier aus über eine weitere Bohrung in der Pumpenwelle zurück in den Saugraum der Pumpe führen.

Alternativ hierzu ist vorgesehen, daß der andere Teilstrom vom Gleitlager aus zu einem Spalt, der zwischen dem inneren Magnettreiber und dem Spalttopf gebildet ist, zwangsgeführt ist, wobei dieser Teilstrom dann durch die in der Pumpenwelle vorgesehene Bohrung zurück in den Saugraum geführt wird.

Vorteilhafterweise sind die Lagerbüchsen und die Distanzbüchsen fest mit einem Lagerträger verbunden. Vorzugsweise sind diese Elemente in den Lagerträger "eingeschrumpft". Hierfür weist der Lagerträger jeweils stirnseitig zur Achsmitte des Lagerträgers ausgerichtete und ausgebildete Fortsätze auf, die die einzelnen Elemente, wie Lagerhülse und Distanzhülse lagegerecht zwischen sich einschließen.

Um die Distanzbüchse gegen ungewolltes Verdrehen im Lagerträger zu sichern, ist ein Radialbolzen vorgesehen, der im montierten Zustand des Gleitlagers den ortsfesten Lagerträger und die Distanzbüchse mindestens teilweise durchdringt.

Zu beiden Seiten der Lagerelemente sind Axiallagerringe ortsfest angeordnet. Sie sind so ausgebildet, daß axial auftretende Kräfte auf die Lagerhülse bzw. Distanzhülse übertragen werden und somit Lagerbüchse bzw. Distanzbüchse ausschließlich Radialkräfte aufnehmen können.

Zur Reduzierung der durch Wirbelströme an den Magnetträgern des inneren Magnettreibers entstehenden Wärme ist vorteilhafterweise vorgesehen, einen weiteren Teilstrom an einer Stelle des hohen Druckes im Pumpengehäuse zu entnehmen und diesen über Kanalausbildungen unmittelbar, d. h. nicht über das Gleitlager, sondern direkt in den Spalt zwischen Magnetträger und Spalttopf zu führen. Dieser Teilstrom wird dann im Spalttopf mit dem anderen bereits beschriebenen Teilstrom zusammenund über das Innere der Pumpenwelle in den Saugraum der Pumpe zurückgeführt.

Weitere vorteilhafte Ausgestaltungen gehen aus den Unteransprüchen und der weiteren Beschreibung sowie den Zeichnungen hervor. Es zeigen:
- Fig. 1: einen Teilschnitt einer Pumpe zur Verdeutlichung der Fließrichtung der einzelnen Teilströme;
- Fig. 2: eine vergrößerte Darstellung des in Fig. 1 dargestellten Gleitlagers, dargestellt im Betrieb im Temperaturarbeitsbereich zwischen 20 und 120°C;
- Fig. 3: eine vergrößerte Darstellung des in Fig. 1 dargestellten Gleitlagers, dargestellt im Betrieb im Temperaturarbeitsbereich zwischen 120 und 250°C;
- Fig. 4: einen Querschnitt durch die Lagerhülse und Distanzhülse des in Fig. 2 dargestellten Gleitlagers und
- Fig. 5: einen Querschnitt durch die Lagerbüchse und Distanzbüchse des in Fig. 2 dargestellten Gleitlagers.

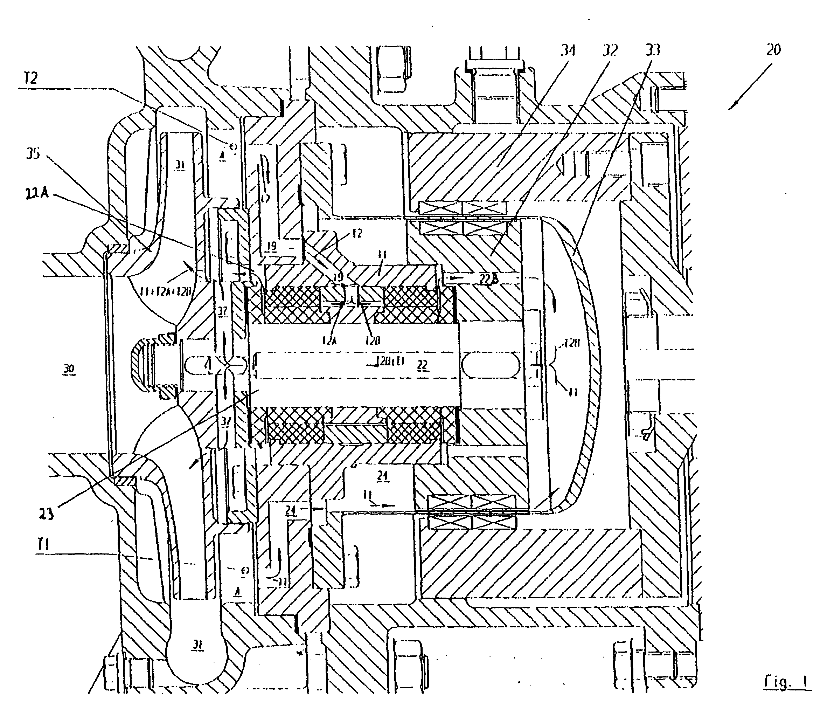

Die in Fig. 1 dargestellte Magnetkupplungspumpe 20 besteht im wesentlichen aus einer in einem Pumpengehäuse (in den Figuren nicht dargestellt) durch ein hydrodynamisches Gleitlager 1 gelagerten Pumpenwelle 23 mit einem hierauf angeflanschten Laufrad 35, wobei das Laufrad 35 in einem Durchgang von einem Saugraum 30 zu einem Druckraum 31 angeordnet ist. Auf der Pumpenwelle 23 ist ein innerer Magnettreiber 32 angeordnet, der unter Zwischenschaltung eines Spalttopfes 33 mit einem äußeren Treiber 34, der von einem in der Zeichnung nicht dargestellten Elektromotor angetrieben wird, zusammenwirkt.

Für die Versorgungen des zur Lagerung der Pumpenwelle 23 notwendigen Gleitlagers 1 wird ein Teil des Fördermediums an einer Stelle A hohen Drucks im Pumpenraum (Druckraum 31) als Teilstrom T2 entnommen und über einen Zufuhrkanal 19 unmittelbar in das Gleitlager 1 geführt. Aufgrund des hohen Druckes und der Rückführung dieses Teilstroms T2 in den Saugbereich 30 der Pumpe wird erreicht, daß die Fließgeschwindigkeit des Teilstromes T2 durch das Gleitlager hindurch groß ist und somit Feststoffpartikel, die möglicherweise in das Gleitlager 1 gelangen, problemlos abtransportiert werden können.

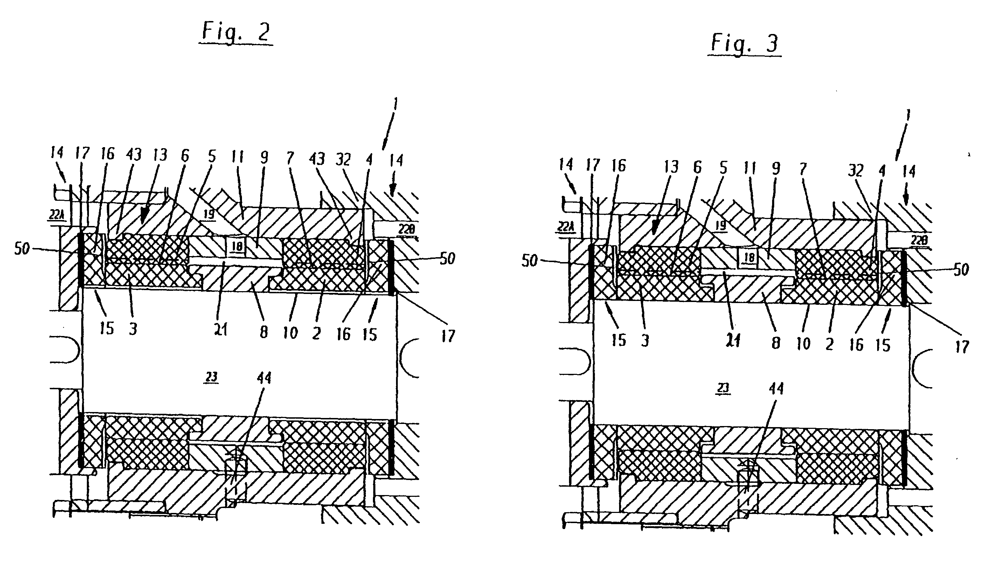

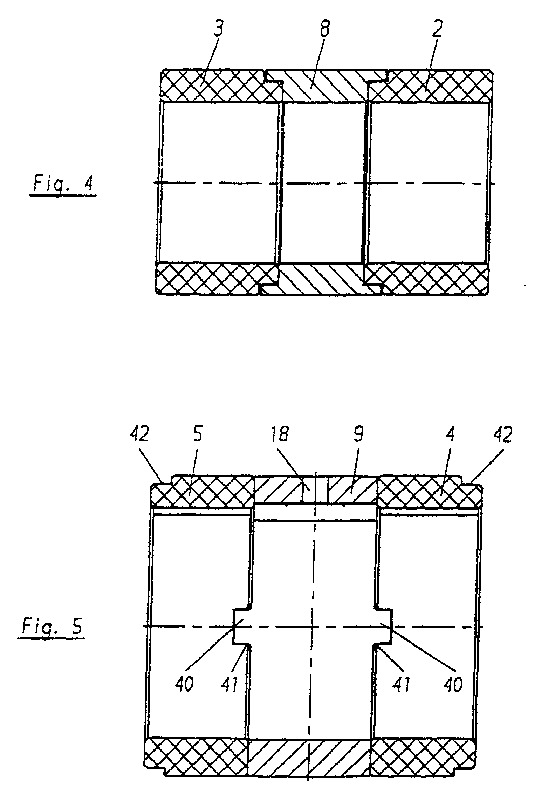

Das Gleitlager 1, wie es in den Fig. 2 bis 5 dargestellt ist, ist als kombiniertes Axial-/Radiallager ausgebildet, wobei das Radiallager 13 im wesentlichen aus vier Elementen besteht, nämlich aus zwei Lagerhülsen 2, 3, aus mindestens ebenso vielen auf den Lagerhülsen 2, 3 gleitbaren und dadurch Gleitflächen 6, 7 bildenden Lagerbüchsen 4 und 5 und aus mindestens einer zwischen den jeweiligen Lagerhülsen 2, 3 angeordneten Distanzhülse 8 und aus mindestens einer zwischen den jeweiligen Lagerbüchsen 4, 5 angeordneten Distanzbüchse 9.

Das Gleitlager 1 ist so aufgebaut, daß in wechselnder Folge eine Lagerhülse 2, 3 und eine Distanzhülse 8 nebeneinander angeordnet sind, wobei die Lagerhülsen 2, 3 der Lagerung der Pumpenwelle 23 zugeordnet sind und aus einem harten oxidkeramischen Werkstoff bestehen, vorzugsweise aus Siliziumkarbid.

Die Distanzbüchse 9 weist auf ihren beiden Stirnseiten Ausgestaltungen in Form von Zapfen 40 auf, die in zusammengebautem Zustand des Gleitlagers 1 in stirnseitige Ausnehmungen 41 der Lagerbüchse 4, 5 eingreifen, um ein Verdrehen dieser Elemente gegeneinander zu verhindern.

Ferner ist die Distanzhülse 8 T-förmig gestaltet, die mit der vorzugsweise einseitig L-förmig ausgebildeten Lagerhülse 2, 3 zusammenwirkt. Ein in dem ortsfesten Lagerträger 11 vorhandener Radialbolzen 44 greift im eingebauten Zustand des Gleitlagers 1 in eine weitere Radialbohrung in der Distanzbüchse 9 ein und erlaubt so eine lagegerechte und verdrehsichere Positionierung der Distanzbüchse 9 gegenüber dem Lagerträger 11, insbesondere der Radialbohrung 18 gegenüber dem Zufuhrkanal 19. Zu beiden Seiten des Radiallagers sind Axiallager 14 angeordnet, die aus Axiallagerelementen 15 bestehen. Die Axiallagerelemente 15 umfassen wiederum Axiallagerringe 16 und Axiallagerscheiben 17.

Der Teilstrom T2, der an der Stelle A hohen Druckes über den Zufuhrkanal 19 zum Gleitlager 1 geführt wird, endet in einer Radialbohrung 18 in der Distanzbüchse 9 und somit in einer zwischen Distanzhülse 8 und Distanzbüchse 9 vorgesehenen Schmiertasche 21. In der Schmiertasche 21, die so ausgebildet ist, daß ein größerer Anteil des Teilstromes T2 aufgenommen werden kann, teilt sich dieser Teilstrom T2 in zwei weitere Teilströme T2a und T2b. Diese Teilströme T2a und T2b strömen aufgrund des hohen Druckes des Teilstromes T2 entlang der Gleitflächen 6, 7 zwischen den Lagerhülsen 2, 3 und den Lagerbüchsen 4, 5 hindurch. Auf der der Distanzbüchse 9 abgewandten Seite der Lagerhülse 4 und 5 sind Spaltausbildungen 50 vorgesehen, die den Teilstrom T2a und T2b zu weiteren Kanalausbildungen 22A/22B führen.

Der eine Teilstrom T2a wird unmittelbar auf dem kürzesten Wege in den Saugraum 30 der Pumpe über Kanalausbildungen 22B zurückgeführt. Bei dem Ausführungsbeispiel, wie es beispielsweise in Fig. 1 dargestellt ist, wird der Teilstrom T2b zur Kanalausbildung 22B, die im inneren Magnettreiber 32 angeordnet sind, in den Spalttopf 33 geführt, und von da aus weiter über Kanalausbildungen 22 in der Pumpenwelle 23 zurück in den Saugraum 30. Bei einem anderen Ausführungsbeispiel wird der Teilstrom T2b unmittelbar entlang des Spaltes, der zwischen dem inneren Magnettreiber 32 und dem äußeren Treiber 34 entlang des Spalttopfes 33 entsteht, geführt. Von hier aus gelangt dann dieser Teilstrom T2b durch Kanalausbildungen 22 in der Pumpenwelle 23 und Kanalausbildungen 37 im Laufrad 35 in den Saugraum 30 der Pumpe zurück.

Zur Verbesserung der Kühl- und Schmiereigenschaften einer solchen Pumpe ist ein weiterer Teilstrom T1 vorgesehen, der ebenfalls an einer Stelle A hohen Drucks entnommen wird und über Kanalausbildungen 24 an die zu kühlende bzw. zu schmierende Stelle geführt wird. Die Entnahme dieses Teilstroms T1 unterscheidet sich von der Entnahmestelle des Teilstroms T2 dadurch, daß die jeweiligen Bohrungen zu unterschiedlichen Zufuhrkanälen 19, 24 führen. Dies bringt den Vorteil mit sich, daß aufgrund der unmittelbaren Zwangsführung der jeweiligen Teilströme T1 und T2 an die zu schmierenden bzw. zu kühlenden Stellen der Druck bzw. die Strömungsgeschwindigkeit in diesen Zufuhrkanälen 19, 24 genau bestimmt werden kann und somit die Schmierquantität und größenordnungsmäßig die Abkühltemperatur berechnet und somit vorherbestimmt werden kann.

Durch die mehrteilige Gestaltung des Gleitlagers sowie der unterschiedlichen Teilstromführungen zur Versorgung des Gleitlagers und zur Reduzierung der durch Wirbelströme an den Magnetträgern des inneren Magnettreibers entstehenden Wärme ist es gelungen, eine Pumpe zu schaffen, die einen besseren Wirkungsgrad als der Stand der Technik aufweist und sich aufgrund des kompakt aufgebauten Gleitlagers einfach warten und reparieren läßt.

## Patentansprüche

1. Hydrodynamisches Gleitlager für einen Läufer einer Pumpe, insbesondere einer Magnetkupplungspumpe, das als kombiniertes Axial- und Radiallager ausgebildet ist, wobei das Gleitlager (1) im wesentlichen
- aus mindestens zwei Lagerhülsen (2, 3) aus hartem, oxidkeramischen Werkstoff,
- aus mindestens ebenso vielen auf den Lagerhülsen (2, 3) gleitbaren und dadurch Gleitflächen (6, 7) bildenden Lagerbüchsen (4, 5) aus hartem, oxidkeramischen Werkstoff,
- aus mindestens einer zwischen den jeweiligen Lagerhülsen (2, 3) angeordneten Distanzhülse (8) aus Metall und
- aus mindestens einer zwischen den jeweiligen Lagerbüchsen (4, 5) angeordneten Distanzbüchse (9) aus Metall besteht,
**dadurch gekennzeichnet, daß** der Innendurchmesser der zumindest zwei Lagerhülsen (2, 3) größer ist als der Innendurchmesser der mindestens einen Distanzhülse (8).

2. Gleitlager nach Ansprüch 1,
**dadurch gekennzeichnet, daß** Lagerbüchsen (4, 5) und Lagerhülsen (2, 3) jeweils aus Siliziumkarbid oder Wolframcarbid bestehen.

3. Gleitlager nach einem der vorhergehenden Ansprüche, **dadurch gekennzeichnet, daß** Lagerbüchsen (4, 5) und Lagerhülsen (2, 3) jeweils aus Aluminiumoxid bestehen.

4. Gleitlager nach einem der vorhergehenden Ansprüche, **dadurch gekennzeichnet, daß** zwischen der Distanzhülse (8) und der Distanzbüchse (9) eine Schmiertasche (21) gebildet ist.

5. Gleitlager nach einem der vorhergehenden Ansprüche, **dadurch gekennzeichnet, daß** die Distanzhülse (8) jeweils stirnseitig im Querschnitt T-förmig ausgebildet ist.

6. Gleitlager nach einem der vorhergehenden Ansprüche, **dadurch gekennzeichnet, daß** eine Lagerhülse (2, 3) auf der zur Distanzhülse (8) hinweisenden Stirnseite L-förmig ausgebildet ist.

7. Gleitlager nach einem der vorhergehenden Ansprüche, **dadurch gekennzeichnet, daß** eine Lagerbüchse (4, 5) jeweils in einem Lagerträger (11) angeordnet ist.

8. Gleitlager nach einem der vorhergehenden Ansprüche, **dadurch gekennzeichnet, daß** die Distanzbüchse (9) in einem Lagerträger (11) angeordnet ist.

9. Gleitlager nach Anspruch 7, **dadurch gekennzeichnet, daß** jeweils eine Lagerbüchse (4, 5) und ein Lagerträger (11) ein einstückiges Teil bilden.

10. Gleitlager nach Anspruch 8, **dadurch gekennzeichnet, daß** die Distanzbüchse (9) und der Lagerträger (11) ein einstückiges Teil bilden.

11. Gleitlager nach einem der vorhergehenden Ansprüche, **dadurch gekennzeichnet, daß**
- das Radiallager (13) durch Lagerhülsen (2, 3) / Lagerbüchsen (4, 5) und
- das Axiallager (14) durch jeweils stirnseitig an Lagerhülsen (2, 3)/Lagerbüchsen (4, 5) angeordnete Axiallagerelemente (15) gebildet sind.

12. Gleitlager nach Anspruch 11, **dadurch gekennzeichnet, daß** die Axiallagerelemente (15) aus Axiallagerringen (16) und Axiallagerscheiben (17) bestehen.

13. Gleitlager nach einem der vorhergehenden Ansprüche, **dadurch gekennzeichnet, daß** in der Distanzbüchse (9) mindestens eine Radialbohrung (18) vorgesehen ist, die mit einem im Lagerträger (11) vorgesehenen Zufuhrkanal (19) fluchtet und so eine Verbindung zu einer zwischen Distanzbüchse (9) und Distanzhülse (8) gebildeten Schmiertasche (21) herstellt.

14. Magnetkupplungspumpe (20)
- mit einer in einem Gehäuse durch ein hydrodynamisches Gleitlager (1) gelagerten Pumpenwelle (23) mit einem Laufrad (35),
- mit wenigstens einem Durchgang von einem Saugraum (30) zu einem Druckraum (31),
- mit einem auf der Pumpenwelle (23) angeordneten inneren Magnettreiber (32),
- mit einem mit dem inneren Magnettreiber (32) unter Zwischenschaltung eines Spalttopfes (33) zusammenwirkenden äußeren Treiber (34) und
- mit einer Teilstromführung (T2) des Fördermediums zur fluidmäßigen Versorgung und Kühlung eines hydrodynamischen Gleitlagers (1) gemäβ Anspruch 1,
- wobei die Teilströmung folgenden Strömungsweg aufweist:
a Entnahme eines Teilstroms (T2) des zu fördernden Mediums in der Pumpe an einer Stelle (A) hohen Drucks,
b Zwangsführung des Teilstroms (T2) über mindestens einen Zufuhrkanal (19) in eine Schmiertasche (21), die im Radiallager (13) des Gleitlagers (1) angeordnet ist,
c Aufteilung des Teilstroms (T2) in zwei weitere Teilströme (T2a) und (T2b),
d Zwangsführung der beiden weiteren Teilströme (T2a) und (T2b) entlang der Gleitflächen (6, 7) der Lagerhülsen (2, 3) bzw. Lagerbüchsen (4, 5) weiter zu den Axiallagerelementen (15),
e Zwangsführung der beiden Teilströme (T2a) und (T2b) über Kanalausbildungen (22A; 22B, 22) zurück in den Saugbereich (30) der Pumpe (20).

15. Magnetkupplungspumpe nach Anspruch 14, **dadurch gekennzeichnet, daß** der eine weitere Teilstrom (T2b) über Kanalausbildungen (22B) durch die Pumpenwelle (23) zurück in den Saugbreich (30) der Pumpe zwangsgeführt ist.

16. Magnetkupplungspumpe nach Anspruch 14, **dadurch gekennzeichnet, daß** die Kanalausbildungen (22) im inneren Magnettreiber (32) angeordnet sind.

17. Magnetkupplungspumpe nach Anspruch 14, **dadurch gekennzeichnet, daß** an der Stelle (A) des hohen Drucks ein weiterer Teilstrom (T1) entnehmbar ist.

18. Magnetkupplungspumpe nach Anspruch 17, **dadurch gekennzeichnet, daß** der weitere Teilstrom (T1) durch andere Kanalausbildungen (24) durch den Spalt zwischen dem inneren Magnettreiber (32) und dem Spalttopf (33) durch Kanalausbildungen (22) in der Pumpenwelle (23) zurück in den Saugbereich (30) der Pumpe zwangsgeführt ist.

## Claims

1. A hydrodynamic sliding bearing for a rotor of a pump, in particular a magnetic coupling pump, formed as a combined thrust and journal-type bearing, the sliding bearing (1) essentially comprising:
- at least two bearing shells (2, 3) of a hard oxide ceramic material,
- at least the same number of bearing bushes (4, 5) of a hard oxide ceramic material sliding, and therefore forming sliding surfaces (6, 7), on the bearing shells (2, 3),
- at least one distance shell (8) of metal disposed between each set of bearing shells (2, 3), and
- at least one distance bush (9) of metal disposed between each set of bearing bushes (4, 5),
**characterized in that** the inner diameter of said at least two bearing shells (2, 3) is greater than the inner diameter of said at least one distance shell (8).

2. The sliding bearing of claim 1, **characterized in that** the bearing bushes (4, 5) and the bearing shells (2, 3) are each made of silicon carbide or tungsten carbide.

3. The sliding bearing of any of the preceding claims, **characterized in that** the bearing bushes (4, 5) and bearing shells (2, 3) are each made of aluminium oxide.

4. The sliding bearing of any of the preceding claims, **characterized in that** between the distance shell (8) and the distance bush (9) there is a lubrication recess (21).

5. The sliding bearing of any of the preceding claims, **characterized in that** the distance shell (8) is T-shaped at each end.

6. The sliding bearing of any of the preceding claims, **characterized in that** a bearing shell (2, 3) is L-shaped at the end facing the distance shell (8).

7. The sliding bearing of any of the preceding claims, **characterized in that** each bearing bush (4, 5) is disposed in a bearing carrier (11).

8. The sliding bearing of any of the preceding claims, **characterized in that** the distance bush (9) is disposed in a bearing carrier (11).

9. The sliding bearing of claim 7, **characterized in that** one bearing bush (4, 5) and one bearing carrier (11) each form an integral part.

10. The sliding bearing of claim 8, **characterized in that** the distance bush (9) and the bearing carrier (11) form an integral part.

11. The sliding bearing of any of the preceding claims, **characterized in that**
- the journal-type bearing (13) is formed by bearing shells (2, 3) / bearing bushes (4, 5) and
- the thrust bearing (14) is formed by axial bearing elements (15) adjacent to the end of each set of bearing shells (2, 3) / bearing bushes (4, 5).

12. The sliding bearing of claim 11, **characterized in that** the thrust bearing elements (15) are comprised of thrust bearing rings (16) and thrust bearing washers (17).

13. The sliding bearing of any of the preceding claims, **characterized in that** in the distance bush (8) there is provided at least one radial bore (18) aligned with a supply channel (19) provided in the bearing carrier (11) thus providing a connection leading to a lubrication recess (21) formed between said distance bush (9) and said distance shell (8).

14. A magnetic coupling pump (20) having
- a pump shaft (23) supported in a housing by a hydrodynamic sliding bearing (1) and having a rotor (35),
- at least one passage from a suction cavity (30) to a pressure cavity (31),
- an inner magnetic driver (32) disposed on the pump shaft (23),
- an outer magnetic driver (34) cooperating with the inner magnetic driver (32) via a splitter (33), and
- a partial flow guide (T2) of the pumped medium for a fluid supply and cooling of a hydrodynamic sliding bearing (1) according to claim 1,
- wherein the partial flow has the following fluid path:
a) extraction of a partial flow (T2) of the pumped medium in the pump at a high pressure location (A),
b) force feeding of the partial flow (T2) via at least one supply channel (19) into a lubrication recess (21) disposed in the journal-type bearing (13) of the sliding bearing (1),
c) splitting the partial flow (T2) into two further partial flows (T2a) and (T2b),
d) force feeding of the two further partial flows (T2a) and (T2b) along the sliding surfaces (6, 7) of the bearing shells (2, 3) and the bearing bushes (4, 5), respectively, and further to the axial bearing elements (15),
e) force feeding of the two partial flows (T2a) and (T2b) via channels (22A; 22B, 22) back into the suction area (30) of the pump (20).

15. The magnetic coupling pump of claim 14, **characterized in that** said one further partial flow (T2b) is force fed via channels (22B) through the pump shaft (23) back into the suction area (30) of the pump.

16. The magnetic coupling pump of claim 14, **characterized in that** the channels (22) are disposed in the inner magnetic driver (32).

17. The magnetic coupling pump of claim 14, **characterized in that** at the high pressure location (A) a further partial flow (T1 ) can be extracted.

18. The magnetic coupling pump of claim 17, **characterized in that** said further partial flow (T1 ) is force fed through other channels (24) through the gap between the inner magnetic driver (32) and the splitter (33), through channels (22) provided in the pump shaft (23), back into the suction area (30) of the pump.

## Revendications

1. Palier à glissement hydrodynamique pour le rotor d'une pompe, en particulier d'une pompe à accouplement magnétique, qui est configuré comme un palier axial et radial combiné, le palier à glissement (1) étant constitué substantiellement
- par au moins deux douilles de palier (2, 3) en matériau dur de céramique oxydée,
- par au moins autant de coussinets de palier (4, 5) en matériau dur de céramique oxydée pouvant glisser sur les douilles de palier (2, 3) et formant ainsi des surfaces de glissement (6, 7),
- par au moins une douille d'écartement (8) en métal placée entre les douilles de palier respectives (2, 3) et
- par au moins une douille d'écartement (9) en métal placée entre les coussinets de palier respectifs (4, 5),
**caractérisé en ce que** le diamètre intérieur des deux douilles de palier (2, 3) qui existent au moins est supérieur au diamètre intérieur de la douille d'écartement qui existe au moins (8).

2. Palier à glissement selon la revendication 1, **caractérisé en ce que** les coussinets de palier (4, 5) et les douilles de palier (2, 3) sont respectivement en carbure de silicium ou en carbure de tungstène.

3. Palier à glissement selon l'une des revendications précédentes, **caractérisé en ce que** les coussinets de palier (4, 5) et les douilles de palier (2, 3) sont respectivement en oxyde d'aluminium.

4. Palier à glissement selon l'une des revendications précédentes, **caractérisé en ce qu'**une poche de lubrification (21) est formée entre la douille d'écartement (8) et la douille d'écartement (9).

5. Palier à glissement selon l'une des revendications précédentes, **caractérisé en ce que** la douille d'écartement (8) est configurée avec une section en forme de T respectivement sur le côté frontal.

6. Palier à glissement selon l'une des revendications précédentes, **caractérisé en ce qu'**une douille de palier (2, 3) est configurée en forme de L sur le côté frontal tourné vers la douille d'écartement (8).

7. Palier à glissement selon l'une des revendications précédentes, **caractérisé en ce qu'**un coussinet de palier (4, 5) est placé respectivement dans un support de palier (11).

8. Palier à glissement selon l'une des revendications précédentes, **caractérisé en ce que** la douille d'écartement (9) est placée dans un support de palier (11).

9. Palier à glissement selon la revendication 7, **caractérisé en ce que** respectivement un coussinet de palier (4, 5) et un support de palier (11 ) forment une pièce en une pièce.

10. Palier à glissement selon la revendication 8, **caractérisé en ce que** la douille d'écartement (9) et le support de palier (11) forment une pièce en une pièce.

11. Palier à glissement selon l'une des revendications précédentes, **caractérisé en ce que**
- le palier radial (13) est formé par des douilles de palier (2,3) / coussinets de palier (4, 5) et
- le palier axial (14) est formé par des éléments de palier axial (15) placés respectivement sur le côté frontal sur des douilles de palier (2, 3) / coussinets de palier (4, 5).

12. Palier à glissement selon la revendication 11, **caractérisé en ce que** les éléments de palier axial (15) sont constitués par des anneaux de palier axial (16) et par des disques de palier axial (17).

13. Palier à glissement selon l'une des revendications précédentes, **caractérisé en ce qu'**au moins une forure radiale (18) est prévue dans la douille d'écartement (9), forure radiale qui est alignée avec un conduit d'admission (19) prévu dans le support de palier (11 ) et qui réalise ainsi une liaison avec une poche de lubrification (21) formée entre la douille d'écartement (9) et la douille d'écartement (8).

14. Pompe à accouplement magnétique (20)
- avec un arbre de pompe (23) avec une roue mobile (35), arbre qui est logé dans un bâti par l'intermédiaire d'un palier à glissement hydrodynamique (1),
- avec au moins un passage d'un espace d'aspiration (30) vers un espace de compression (31),
- avec un excitateur magnétique intérieur (32) placé sur l'arbre de pompe (23),
- avec un excitateur extérieur (34) qui coopère avec l'excitateur magnétique intérieur (32) en intercalant une tête à fente (33) et
- avec un guidage de flux partiel (T2) du liquide refoulé pour l'alimentation en fluide et le refroidissement d'un palier à glissement hydrodynamique (1) selon la revendication 1,
- le flux partiel présentant le parcours d'écoulement suivant :
a prélèvement d'un courant partiel (T2) du liquide à refouler dans la pompe à un endroit (A) de haute pression,
b guidage forcé du courant partiel (T2) par au moins un conduit d'alimentation (19) dans une poche de lubrification (21) qui est placée dans le palier radial (13) du palier à glissement (1),
c répartition du courant partiel (T2) en deux autres courants partiels (T2a) et (T2b),
d guidage forcé des deux autres courants partiels (T2a) et (T2b) le long des surfaces de glissement (6, 7) des douilles de palier (2, 3) et des coussinets de palier (4, 5) plus loin vers les éléments de palier axial (15),
e guidage forcé des deux courants partiels (T2a) et (T2b) par des configurations de conduit (22A ; 22B, 22) pour retourner dans la zone d'aspiration (30) de la pompe (20).

15. Pompe à accouplement magnétique selon la revendication 14, **caractérisée en ce que** l'un des courants partiels supplémentaires (T2b) est à guidage forcé par des configurations de conduit (22B) par l'arbre de pompe (23) pour retourner dans la zone d'aspiration (30) de la pompe.

16. Pompe à accouplement magnétique selon la revendication 14, **caractérisée en ce que** les configurations de conduit (22) sont placées dans l'excitateur magnétique intérieur (32).

17. Pompe à accouplement magnétique selon la revendication 14, **caractérisée en ce qu'**un autre courant partiel (T1) peut être prélevé à l'endroit (A) de la haute pression.

18. Pompe à accouplement magnétique selon la revendication 17, **caractérisée en ce que** l'autre courant partiel (T1) est à guidage forcé par des autres configurations de conduit (24) à travers la fente entre l'excitateur magnétique intérieur (32) et le pot à fente (33) par des configurations de conduit (22) dans l'arbre de la pompe (23) pour retourner dans la zone d'aspiration (30) de la pompe.
